# EUROPÄISCHE PATENTSCHRIFT

(11) **EP 3 007 816 B1**
(45) Veröffentlichungstag und Bekanntmachung des Hinweises auf die Patenterteilung: **09.08.2017**
(21) Anmeldenummer: 14729016.7
(22) Anmeldetag: 11.06.2014
(51) Int. Cl.: B01J 19/00, B01J 19/18, B01J 4/00, B01J 19/20, C08G 69/28, C08F 2/00, C08L 77/06

(54) **POLYMERISATIONSVERFAHREN MIT VERRINGERTER BILDUNG VON ABLAGERUNGEN IM REAKTIONSRAUM**
POLYMERISATION PROCESS WITH REDUCED DEPOSIT FORMATION IN THE REACTION CHAMBER
PROCÉDÉ DE POLYMÉRISATION PERMETTANT DE RÉDUIRE LA FORMATION DE DÉPÔTS DANS LA CHAMBRE DE RÉACTION

(30) Priorität: 12.06.2013 EP 13171657
(43) Veröffentlichungstag der Anmeldung: 20.04.2016
(73) Patentinhaber: BASF SE, 67056 Ludwigshafen am Rhein (DE)
(72) Erfinder: ZHU, Ning, 68163 Mannheim (DE); STAMMER, Achim, 67251 Freinsheim (DE); CLAUSS, Joachim, 64297 Darmstadt (DE); WITT, Uwe, 67112 Mutterstadt (DE); KORY, Gad, 69251 Gaiberg (DE); BIEDASEK, Silke, 67061 Ludwigshafen (DE)
(74) Vertreter: BASF IP Association
(86) Internationale Anmeldenummer: PCT/EP2014/062119
(87) Internationale Veröffentlichungsnummer: WO 2014/198766

(56) Entgegenhaltungen:
- EP-A1- 0 267 025
- EP-A1- 2 471 594
- US-A- 2 838 107
- US-A- 2 993 842
- US-A- 3 545 938
- US-A- 3 834 441

## Beschreibung

### HINTERGRUND DER ERFINDUNG

Die vorliegende Erfindung betrifft ein Verfahren zur Synthese eines Polymers, insbesondere eines Polyamids, unter Abscheidung einer gasförmigen Substanz, insbesondere von Wasserdampf.

### STAND DER TECHNIK

Die Herstellung einer Vielzahl technischer Polymere erfolgt durch eine Polykondensation, bei der der Molekulargewichtsaufbau mit der Freisetzung einer niedermolekularen Komponente einhergeht, die in der Regel zumindest teilweise aus dem Reaktionsgemisch entfernt werden muss, z. B. um das angestrebte Molekulargewicht und/oder die angestrebten Produkteigenschaften zu erzielen.

Eine wichtige Klasse der Polykondensationspolymere sind die Polyamide. Sie dienen neben den Hauptanwendungsbereichen für Folien, Fasern und Werkstoffen einer Vielzahl weiterer Verwendungszwecke. Unter den Polyamiden sind das Polyamid 6 (Polycaprolactam) und das Polyamid 66 (Nylon, Polyhexamethylenadipinsäureamid) die am meisten hergestellten Polymere. Die Herstellung von Polyamid 66 erfolgt überwiegend durch Polykondensation sogenannter AH-Salzlösungen, d. h. von wässrigen Lösungen, die Adipinsäure und 1,6-Diaminohexan (Hexamethylendiamin) in stöchiometrischen Mengen enthalten. Das klassische Verfahren zur Herstellung von Polyamid 6 ist die hydrolytische ringöffnende Polymerisation von ε-Caprolactam, die immer noch von sehr großer technischer Bedeutung ist. Konventionelle Herstellverfahren für Polyamid 6 und Polyamid 66 sind z. B. in Kunststoffhandbuch, ¾ Technische Thermoplaste: Polyamide, Carl Hanser Verlag, 1998, München, S. 42-71, beschrieben.

Eine spezielle Klasse technischer Kunststoffe, die breite Verwendung gefunden haben, sind teilkristalline oder amorphe, thermoplastische, teilaromatische Polyamide, die sich insbesondere durch ihre hohe Temperaturbeständigkeit auszeichnen und daher auch als Hochtemperatur-Polyamide (HTPA) bezeichnet werden.

Speziell bei der Synthese von Hochtemperaturpolyamiden ist es notwendig, Wasser aus der Reaktionsschmelze zu entfernen. So beginnt die Herstellung dieser HTPA in der Regel mit der Bildung einer wässrigen Salzlösung aus wenigstens einem Diamin und wenigstens einer Dicarbonsäure sowie optional weiteren Monomerkomponenten, wie Lactamen, ω-Aminosäuren, Monoaminen, Monocarbonsäuren und Mischungen davon, mit der Maßgabe, dass wenigstens eine der Komponenten eine aromatische Gruppe aufweist. An die Bildung der Salzlösung schließt sich dann eine Oligomerisierung in der flüssigen Phase an, während dieser in der Regel noch keine Abtrennung von Wasser erfolgt. Am Ende dieser Oligomerisierung weisen die Oligomere im Mittel beispielsweise 4 bis 10 Wiederholungseinheiten bei einem Umsatz von etwa 70 bis 80 % auf. Zum weiteren Molekulargewichtsaufbau stehen dann zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation. Es besteht insbesondere ein Bedarf an geeigneten Vorrichtungen und Verfahren zur Durchführung dieser Schmelzekondensation.

Es ist beispielsweise bekannt, eine Präpolymerschmelze, die Wasser enthält, in einem Reaktor bei einer Temperatur von ca. 350 °C und einem Druck im Bereich von 10 bis 20 bar zur Reaktion zu bringen. Hierbei kommt es allerdings zu Ablagerungen an den Reaktorinnenwänden oberhalb der flüssigen Phase. Dies führt zu einer verschlechterten Produktqualität.

Auch bei der Synthese anderer Polymere ist die Entfernung gasförmiger Substanzen aus der Polymerschmelze erforderlich. So beschreibt das Patent US 4,110,316 ein Verfahren zur Synthese von Polyethylenterephthalat (PET), bei dem ein gasförmiges Gemisch von 91,1 % Ethylenglycol und 8,9 % Wasser aus der Schmelze abgeschieden wird, um anschließend das Ethylenglycol zurückzugewinnen. Die US 2002/0128427 A1 beschreibt die Synthese von Polyestern mit verringertem Anteil freier Acetaldehyde unter Verwendung von Acetaldehydblockern. Diese reagieren in der Polymerschmelze unter Bildung von Ethylenglycol, welches zusammen mit Wasser als Gas aus der Schmelze abgeschieden werden muss, um eine hydrolytische und glycolytische Zersetzung des Polyesters zu verhindern. Auch die Durchführung dieser Verfahren kann durch die Bildung von Ablagerungen im Reaktorinnenraum behindert werden. Die EP 0267025 A1 beschreibt ein Verfahren zur Behandlung von Hochviskosen Fluiden, die z.B. durch Blockpolymerisation hergestellt werden, in einem Dünnschichtverdampfer.

Die EP 2471594 A1 beschreibt einen Rohrreaktor und dessen Einsatz in einem Verfahren zur kontinuierlichen Herstellung von Polymeren wie insbesondere synthetischen Kautschuken.

Die US 3834441 A beschreibt ein Verfahren zur Aufkonzentration von Polymerlösungen durch Verdampfung. Eine Polymerlösung wird hierbei unter Druck erhitzt und über eine Düse in ein Spiralrohr entspannt.

Die US 3545938 A beschreibt einen vertikalen, zylindrischen chemischen Druckreaktor zur Herstellung und Verarbeitung von viskosen Materialien.

Die US 2993842 A beschreibt eine Vorrichtung für die Destillation von Flüssigkeiten und ein Verfahren für die fraktionierende Destillation von Flüssigkeiten.

### ZUSAMMENFASSUNG DER ERFINDUNG

Der Gegenstand der Erfindung ist ein kontinuierliches Verfahren zur Synthese eines Polymers unter Abscheidung einer gasförmigen Substanz in einer Vorrichtung umfassend
- einen Reaktionsraum (1), der einen im Wesentlichen kreiszylinderförmigen oberen Abschnitt (11), der durch zwei Kreisflächen (111, 112) und eine Mantelfläche (113) begrenzt wird und eine Zylinderlängsachse aufweist, sowie einen unteren Abschnitt (12) umfasst, wobei der obere Abschnitt (11) und der untere Abschnitt (12) über die erste Kreisfläche (111) miteinander verbunden sind,
- eine Einlassöffnung (2), die so in der Mantelfläche (113) angeordnet ist, dass ein tangentialer Eintrag einer Flüssigkeit durch die Einlassöffnung (2) entlang der Mantelfläche (113) in den oberen Abschnitt (11) ermöglicht wird,
- eine erste Auslassöffnung (3), die in einer Wand des unteren Abschnitts (12) angeordnet ist,
- eine zweite Auslassöffnung (4), die in der zweiten Kreisfläche (112) oder in der Mantelfläche (113) zwischen der Einlassöffnung (2) und der zweiten Kreisfläche (112) angeordnet ist, und
- wenigstens eine erste Abtrageeinrichtung (51), die mindestens zwischen der zweiten Kreisfläche (112) und der Einlassöffnung (2) entlang der Zylinderlängsachse verfahrbar angeordnet ist und die Mantelfläche (113) berührt,
mit den folgenden Verfahrensschritten:
a) Zufuhren einer Präpolymerschmelze (7) in einen kreiszylinderförmigen ersten Abschnitt (11) eines Reaktionsraums (1) durch eine Einlassöffnung (2) tangential zu einer Mantelfläche (113) des ersten Abschnitts (11),
b) Polymerisation der Präpolymerschmelze (7) zu einer Polymerschmelze (8),
c) Entfernen der Polymerschmelze (8) aus dem Reaktionsraum (1) durch eine erste Auslassöffnung (3) des Reaktionsraums (1), und
d) Entfernen einer gasförmigen Substanz (9) aus dem Reaktionsraum (1) durch eine zweite Auslassöffnung (4) des Reaktionsraums (1) oberhalb der Einlassöffnung (2),
wobei Ablagerungen an mindestens einer Innenwand des oberen Abschnitts (11) des Reaktionsraums (1) oberhalb der Einlassöffnung (2) von wenigstens der ersten Abtrageeinrichtung (51) entfernt werden.

Eine spezielle Ausführungsform ist ein Verfahren zur Synthese eines aliphatischen oder teilaromatischen Polyamids, bei dem man ein Präpolymer des aliphatischen oder teilaromatischen Polyamids bereitstellt und der eingesetzten Vorrichtung zuführt.

### BESCHREIBUNG DER ERFINDUNG

Ein Präpolymer bezeichnet im Sinne der Erfindung eine Zusammensetzung, die polymere Verbindungen mit komplementären funktionellen Gruppen enthält, die zu einer Kondensationsreaktion unter Molekulargewichtserhöhung befähigt sind.

Der Begriff "Präpolymerschmelze" bezeichnet im Sinne der Erfindung eine fließfähige Zusammensetzung des jeweils vorliegenden Reaktionsgemischs, das die Präpolymere enthält. Dabei muss die Temperatur der Präpolymerschmelze nicht zwingend oberhalb der Schmelztemperatur des reinen Präpolymers liegen. Die Fließfähigkeit kann auch durch die Anwesenheit anderer Komponenten der Präpolymerschmelze, wie z. B. Wasser, niedermolekularer Oligomere, etc., gegeben sein. In einer speziellen Ausführungsform liegt in der Präpolymerschmelze das Präpolymer selbst schmelzförmig vor.

Unter einer Polymerschmelze wird erfindungsgemäß eine Schmelze verstanden, die sich im chemischen Gleichgewicht befindet und gegebenenfalls auch noch Oligomere, Monomere und Wasser enthalten kann.

Die Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde PMMA als Polymerstandard mit niedriger Polydispersität eingesetzt.

Während unterhalb der Einlassöffnung bei der Synthese eines Polymers die Bildung von Ablagerungen an der Innenwand des Reaktionsraums dadurch vermieden werden kann, dass diese durch kontinuierliche Einbringung einer Präpolymerschmelze durch die Einlassöffnung fortgespült werden, besteht die Gefahr, dass sich oberhalb der Einlassöffnungen Ablagerungen bilden. Dies kann erfindungsgemäß durch ein Verfahren von wenigstens der ersten Abtrageeinrichtung entlang der Zylinderlängsachse vermieden werden. Die Eignung der wenigstens ersten Abtrageeinrichtung, um Ablagerungen von der Innenwand des Reaktionsraums oberhalb der Einlassöffnung zu entfernen, wird erfindungsgemäß bevorzugt dadurch erhöht, dass wenigstens die erste Abtrageeinrichtung um die Zylinderlängsachse drehbar ist.

Um die Bildung von Ablagerungen unterhalb der Einlassöffnung zu vermeiden, ist die Vorrichtung des erfindungsgemäßen Verfahrens vorzugsweise so ausgebildet, dass eine durch die Einlassöffnung in den Reaktionsraum eingebrachte Präpolymerschmelze die Innenwand des Reaktionsraums unterhalb der Einlassöffnung vollständig benetzt. Dies wird dadurch realisiert, dass die Einlassöffnung so in der Mantelfläche angeordnet ist, dass ein tangentialer Eintrag einer Flüssigkeit durch die Einlassöffnung entlang der Mantelfläche im oberen Abschnitt ermöglicht wird. Die Einlassöffnung kann dabei sowohl einen runden als auch einen vieleckigen, insbesondere einen quadratischen Querschnitt aufweisen. In einer anderen Ausführungsform der Erfindung ist die Einlassöffnung mittels einer Einlassleitung mit der zweiten Kreisfläche des oberen Abschnitts verbunden und so angeordnet, dass sie einen tangentialen Eintrag einer Flüssigkeit durch die Einlassöffnung entlang der Mantelfläche im oberen Abschnitt ermöglicht. Um ein Verfahren der wenigstens ersten Abtrageeinrichtung zu ermöglichen, weist wenigstens die erste Abtrageeinrichtung dabei eine Öffnung auf, durch welche die Einlassleitung geführt ist.

Weiterhin ist es bevorzugt, dass wenigstens die erste Abtrageeinrichtung Öffnungen aufweist, um einen Durchtritt einer gasförmigen Substanz durch die wenigstens erst Abtrageeinrichtung zu ermöglichen.

Wenn die zweite Auslassöffnung mit einer Auslassleitung verbunden ist, so ist es möglich, dass sich bei der Synthese eines Polymers auch in dieser Auslassleitung Ablagerungen bilden. Um dies zu vermeiden, ist es erfindungsgemäß bevorzugt, dass in der Auslassleitung wenigstens eine zweite Abtrageeinrichtung angeordnet ist, die entlang der Auslassleitung verfahrbar angeordnet ist und die Innenfläche der Auslassleitung berührt.

Um den sicheren Transport des synthetisierten Polymers durch die erste Auslassöffnung aus dem Reaktionsraum heraus zu ermöglichen, ist es erfindungsgemäß bevorzugt, dass ein Querschnitt des unteren Abschnitts sich vom oberen Abschnitt zu der ersten Auslassöffnung hin verringert. Hierdurch nimmt die Geschwindigkeit, mit der sich beispielsweise eine Polymerschmelze im Reaktionsraum auf die erste Auslassöffnung hin zubewegt, mit sinkendem Abstand zu der ersten Auslassöffnung zu. Weiterhin ist es bevorzugt, dass in dem unteren Abschnitt des Reaktionsraums eine Transportvorrichtung angeordnet ist, die eingerichtet ist, um eine Flüssigkeit, insbesondere eine Polymerschmelze, aus dem unteren Abschnitt in die erste Auslassöffnung zu transportieren. Hierbei kann es sich beispielsweise um eine Transportschnecke handeln.

Das erfindungsgemäße Verfahren wird kontinuierlich durchgeführt, sodass ein stetiger Strom der Präpolymerschmelze durch die tangentiale Einbringung die gesamte Innenfläche des Reaktionsraums unterhalb der Einlassöffnung benetzt und so eine Bildung von Ablagerungen verhindert. Ablagerungen, die sich oberhalb der Einlassöffnung im Reaktionsraum bilden, werden von wenigstens der ersten Abtrageeinrichtung entfernt. Die wenigstens erste Abtrageeinrichtung kann hierbei kontinuierlich und auch diskontinuierlich betrieben werden. Zum Abtragen der Ablagerungen wird sie entlang der Zylinderlängsachse des ersten Abschnitts oberhalb der Einlassöffnung verfahren. Vorzugsweise wird sie dabei auch noch um die Zylinderlängsachse des ersten Abschnitts gedreht.

Aufgrund der gegenüber der Präpolymerschmelze erhöhten Viskosität der Polymerschmelze sinkt diese zum Boden des Reaktionsraums und verlässt ihn durch die erste Auslassöffnung. Dies wird erfindungsgemäß vorzugsweise dadurch beschleunigt, dass die Geschwindigkeit, mit der die Polymerschmelze sich auf die erste Auslassöffnung zubewegt, mit sinkendem Abstand zu der ersten Auslassöffnung gesteigert wird. Dies wird besonders bevorzugt dadurch erreicht, dass die Polymerschmelze mittels einer Transportvorrichtung zur ersten Auslassöffnung transportiert wird.

Grundsätzlich kann das erfindungsgemäße Verfahren mit jedem Polymer durchgeführt werden, das sich in eine Schmelze überführen lässt. Bevorzugt ist das Polymer ausgewählt unter thermoplastischen Polymeren. Besonders bevorzugt ist das Polymer ausgewählt unter Polyamiden, thermoplastischen Polyurethanen, Polyolefinen, vinylaromatischen Polymeren, Polyestern, Polyacetalen, Polycarbonaten, Polysulfonen, Polyethersulfonen und Mischungen davon.

Vorzugsweise ist das Polymer ein Polyamid und die gasförmige Substanz ist Wasserdampf.

Eine spezielle Ausführungsform des erfindungsgemäßen Verfahrens ist daher ein Verfahren zur Synthese eines aliphatischen oder teilaromatischen Polyamids, bei dem man in Schritt a) ein Präpolymer des aliphatischen oder teilaromatischen Polyamids bereitstellt und der erfindungsgemäß eingesetzten Vorrichtung zuführt.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1 Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck "C₁-C₄-Alkyl" unsubstituierte geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aromatischen Dicarbonsäuren, aliphatischen Dicarbonsäuren, cycloaliphatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder können beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, insbesondere die Methylester oder Ethylester. Dicarbonsäuren liegen bevorzugt als Mono- oder Dialkylester, besonders bevorzugt Mono- oder Di-C₁-C₄-alkylester, besonders bevorzugt Monomethylester, Dimethylester, Monoethylester oder Diethylester vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen C₁-C₄-Alkylkomponenten, insbesondere Methylethylester vor.

Die Bereitstellung des Polyamid-Präpolymers erfolgt durch Polykondensation einer wässrigen Zusammensetzung, die wenigstens eine zur Polyamidbildung geeignete Komponente enthält.

Bevorzugt enthält das Präpolymer (und dementsprechend das aliphatische oder teilaromatische Polyamid) Komponenten eingebaut, die ausgewählt sind unter
A) unsubstituierten oder substituierten aromatischen Dicarbonsäuren und Derivaten von unsubstituierten oder substituierten aromatischen Dicarbonsäuren,
B) unsubstituierten oder substituierten aromatischen Diaminen,
C) aliphatischen oder cycloaliphatischen Dicarbonsäuren und Derivaten davon,
D) aliphatischen oder cycloaliphatischen Diaminen,
E) Monocarbonsäuren und Derivaten davon,
F) Monoaminen,
G) mindestens dreiwertigen Aminen,
H) Lactamen,
I) ω-Aminosäuren,
K) von A) bis I) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten C) oder D) vorhanden sein muss und keine der Komponenten A) und B) vorhanden sein darf. Für aliphatische Polyamide vom Typ PA Z (wie PA 6 oder PA 12) gilt die Maßgabe, dass mindestens die Komponente H) vorhanden sein muss.

Eine bevorzugte Ausführungsform sind teilaromatische Polyamide. Für teilaromatische Polyamide gilt die Maßgabe, dass mindestens eine der Komponenten A) oder B) und mindestens eine der Komponenten C) oder D) vorhanden sein muss.

Die aromatischen Dicarbonsäuren A) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren A) weisen vorzugsweise wenigstens einen (z. B. 1, 2, 3 oder 4) C₁-C₄-Alkylrest auf. Insbesondere weisen substituierte aromatischen Dicarbonsäuren A) 1 oder 2 C₁-C₄-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, insbesondere Methyl und Ethyl und speziell Methyl. Substituierte aromatische Dicarbonsäuren A) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure A) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfoisophthalsäure.

Besonders bevorzugt wird als aromatische Dicarbonsäure A) Terephthalsäure, Isophthalsäure oder ein Gemisch aus Terephthalsäure und Isophthalsäure eingesetzt.

Bevorzugt weisen die erfindungsgemäß bereitgestellten teilaromatischen Polyamid-Präpolymere einen Anteil von aromatischen Dicarbonsäuren an allen Dicarbonsäuren von wenigstens 50 Mol%, besonders bevorzugt von 70 Mol% bis 100 Mol%, auf. In einer speziellen Ausführungsform weisen die nach dem erfindungsgemäßen Verfahren hergestellten teilaromatischen Polyamide (und die in Schritt a) bereitgestellten Präpolymere), einen Anteil an Terephthalsäure oder Isophthalsäure oder einem Gemisch aus Terephthalsäure und Isophthalsäure, bezogen auf alle Dicarbonsäuren von wenigstens 50 Mol%, bevorzugt von 70 Mol% bis 100 Mol%, auf.

Die aromatischen Diamine B) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren C) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine D) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, 2-Methyl-1,8-octamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin D) ausgewählt unter Hexamethylendiamin, 2-Methylpentamethylendiamin, Octamethylendiamin, Nonamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin D) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin D) ausschließlich Hexamethylendiamin einpolymerisiert.

In einer weiteren speziellen Ausführung enthalten die teilaromatischen Polyamide als Diamin D) ausschließlich Bis-(4-aminocyclohexyl)-methan einpolymerisiert.

In einer weiteren speziellen Ausführung enthalten die teilaromatischen Polyamide als Diamin D) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin D) ausschließlich Isophorondiamin (IPDA) einpolymerisiert.

Die Präpolymere (und entsprechend die aliphatischen und die teilaromatischen Polyamide) können wenigstens eine Monocarbonsäure E) einpolymerisiert enthalten. Die Monocarbonsäuren E) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren E) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, Versatic^{®}-Säuren, Koch^{®}-Säuren und Mischungen davon.

Werden als Monocarbonsäuren E) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure E) ausgewählt unter Essigsäure, Propionsäure, Benzoesäure und Mischungen davon.

In einer speziellen Ausführung enthalten die Präpolymere (und entsprechend die aliphatischen und die teilaromatischen Polyamide) als Monocarbonsäure E) ausschließlich Propionsäure einpolymerisiert.

In einer weiteren speziellen Ausführung enthalten die Präpolymere (und entsprechend aliphatischen und die teilaromatischen Polyamide) als Monocarbonsäure E) ausschließlich Benzoesäure einpolymerisiert.

In einer weiteren speziellen Ausführung enthalten die Präpolymere (und entsprechend die aliphatischen und die teilaromatischen Polyamide) als Monocarbonsäure E) ausschließlich Essigsäure einpolymerisiert.

Die Präpolymere (und entsprechend die aliphatischen und die teilaromatischen Polyamide) können wenigstens ein Monoamin F) einpolymerisiert enthalten. Dabei enthalten die aliphatischen Polyamide nur aliphatische Monoamine oder alicyclische Monoamine einpolymerisiert. Die Monoamine F) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine F) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der Präpolymere (und entsprechend der aliphatischen und der teilaromatischen Polyamide) kann zusätzlich wenigstens ein mindestens dreiwertiges Amin G) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]-methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine G) eingesetzt.

Geeignete Lactame H) sind ε-Caprolactam, 2-Piperidon (δ-Valerolatam), 2-Pyrrolidon (γ-Butyrolactam), Capryllactam, Önanthlactam, Lauryllactam und Mischungen davon.

Geeignete ω-Aminosäuren I) sind 6-Aminocapronsäure, 7-Aminoheptansäure, 11-Aminoundecansäure, 12-Aminododecansäure und Mischungen davon.

Geeignete von A) bis I) verschiedene, damit cokondensierbare Verbindungen K) sind wenigstens dreiwertige Carbonsäuren, Diaminocarbonsäuren, etc.

Geeignete Verbindungen K) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

In einer bevorzugten Ausführungsform dient das erfindungsgemäße Verfahren zur Herstellung eines aliphatischen Polyamids.

Das Polyamid ist dann vorzugsweise ausgewählt ist unter PA 6, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere handelt es sich bei dem aliphatischen Polyamid um PA 6, PA 66 oder PA 666, ganz besonders bevorzugt um PA 6.

In einer weiteren bevorzugten Ausführungsform dient das erfindungsgemäße Verfahren zur Herstellung eines teilaromatischen Polyamids.

Bevorzugt ist das Polyamid dann ausgewählt unter PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Besonders bevorzugt ist das Polyamid dann ausgewählt unter PA 6.T, PA 9.T, PA 10.T, PA 12.T, PA 6.I, PA 9.I, PA 10.I, PA 12.I, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T
und Copolymeren und Gemischen davon.

In einer speziellen Ausführung handelt es sich bei dem teilaromatischen Polyamid um PA 6.T/6.I.

In einer weiteren speziellen Ausführung handelt es sich bei dem teilaromatischen Polyamid um PA 6.T/6.I/IPDA.T/IPDA.I.

In einer weiteren speziellen Ausführung handelt es sich bei dem teilaromatischen Polyamid um PA 6.T/6.I/MXDA.T/MXDA.I.

Zur Herstellung der bereitgestellten Präpolymere wird im Allgemeinen eine wässrige Zusammensetzung eingesetzt, die wenigstens eine zur Polyamidbildung geeignete Komponente enthält. Die Herstellung der Präpolymere kann grundsätzlich nach üblichen, dem Fachmann bekannten Verfahren erfolgen. Ein geeignetes Verfahren zur Herstellung von teilaromatischen Polyamid-Oligomeren ist z. B. in der EP 0 693 515 A1 beschrieben.

Die zum Einsatz in dem erfindungsgemäßen Verfahren bereitgestellten Präpolymere (speziell die Polyamid-Präpolymere) weisen vorzugsweise ein zahlenmittleres Molekulargewicht Mₙ von etwa 500 bis etwa 12000 g/mol auf, bevorzugt von etwa 1000 bis 4000 g/mol.

Grundsätzlich kann das erfindungsgemäße Verfahren in jeder hierfür geeigneten Vorrichtung durchgeführt werden. Vorzugsweise wird es allerdings in der oben beschriebenen erfindungsgemäßen Vorrichtung durchgeführt.

Wird das erfindungsgemäße Verfahren zur Herstellung aliphatischer Polyamide eingesetzt, weisen diese vorzugsweise ein zahlenmittleres Molekulargewicht Mₙ in einem Bereich von 13000 bis 28000 g/mol auf.

Wird das erfindungsgemäße Verfahren zur Herstellung teilaromatischer Polyamide eingesetzt, weisen diese vorzugsweise ein zahlenmittleres Molekulargewicht Mₙ in einem Bereich von 13000 bis 25000 g/mol, besonders bevorzugt von 15000 bis 20000 g/mol, auf.

Die nach dem erfindungsgemäßen Verfahren erhaltenen aliphatischen Polyamide weisen vorzugsweise ein gewichtsmittleres Molekulargewicht M_{w} in einem Bereich von 20000 bis 140000 g/mol auf.

Die nach dem erfindungsgemäßen Verfahren erhaltenen teilaromatischen Polyamide weisen vorzugsweise ein gewichtsmittleres Molekulargewicht M_{w} in einem Bereich von 25000 bis 125000 g/mol auf.

Die nach dem erfindungsgemäßen Verfahren erhaltenen aliphatischen und teilaromatischen Polyamide weisen vorzugsweise eine Polydispersität PD (= M_{w}/Mₙ) von höchstens 6, besonders bevorzugt von höchstens 5, insbesondere von höchstens 3,5, auf.

### FIGURENBESCHREIBUNG UND BEISPIELE

Die Erfindung wird nun anhand von Ausführungsbeispielen mit Bezug zu den Zeichnungen erläutert.
- Fig. 1: zeigt einen Querschnitt einer Vorrichtung gemäß einer Ausführungsform des erfindungsgemäßen Verfahrens.
- Fig. 2: zeigt einen Schnitt der Vorrichtung gemäß Fig. 1 entlang der Linie II-II.
- Fig. 3: zeigt einen Querschnitt einer Vorrichtung gemäß einer anderen Ausführungsform des erfindungsgemäßen Verfahrens.
- Fig. 4: zeigt eine Aufsicht auf die Vorrichtung gemäß Fig. 3 unter Weglassung der Oberseite ihres Reaktionsraums.

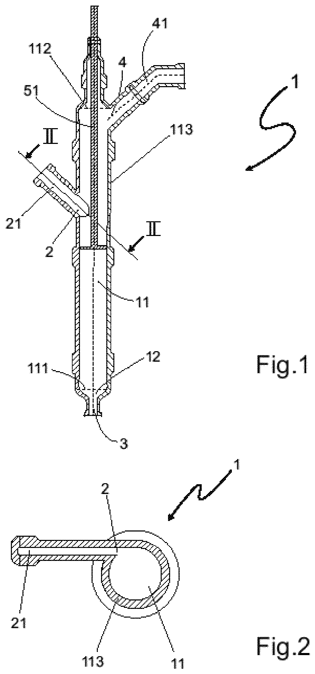

Eine erste Ausführungsform des erfindungsgemäßen Verfahrens ist in den Fig. 1 und 2 dargestellt. Ein Reaktionsraum 1 weist einen oberen Abschnitt 11 und einen unteren Abschnitt 12 auf. Der obere Abschnitt 11 ist kreiszylinderförmig und wird durch zwei Kreisflächen 111, 112 und eine Mantelfläche 113 begrenzt. Der obere Abschnitt 11 und der untere Abschnitt 12 sind über die erste Kreisfläche 111 miteinander verbunden. In der Mantelfläche 113 des oberen Abschnitts 11 ist eine Einlassöffnung 2 angeordnet, welche mit einer Einlassleitung 21 verbunden ist. Die Einlassöffnung 2 ist so angeordnet, dass ein tangentialer Eintrag einer Flüssigkeit durch die Einlassöffnung 2 entlang der Mantelfläche 113 im oberen Abschnitt 11 des Reaktionsraums 1 ermöglicht wird. Der in Fig. 1 dargestellte Querschnitt des unteren Abschnitts 12 verringert sich vom oberen Abschnitt 11 nach unten hin. Der untere Abschnitt 12 endet in einer ersten Auslassöffnung 3. Eine zweite Auslassöffnung 4 ist oberhalb der Einlassöffnung 2 in der Mantelfläche 113 des oberen Abschnittes 11 angeordnet und mit einer Auslassleitung 41 verbunden. Eine erste Abtrageeinrichtung 51 ist im oberen Abschnitt 11 des Reaktionsraums 1 verfahrbar angeordnet. Sie besteht aus einem durch die Decke des Reaktionsraumes 1 geführten Stab, der an seiner Unterseite in einem Abtragekopf endet. Der Abtragekopf berührt die Innenwand des oberen Abschnitts 11. Die Länge des Stabes ist so gewählt, dass der Abtragekopf über den gesamten Bereich oberhalb der Einlassöffnung 2 sowie über einen Teil des Bereiches des oberen Abschnitts 11 unterhalb der Einlassöffnung 2 verfahrbar ist. Außerdem ist die erste Abtrageeinrichtung 51 um die Zylinderlängsachse drehbar.

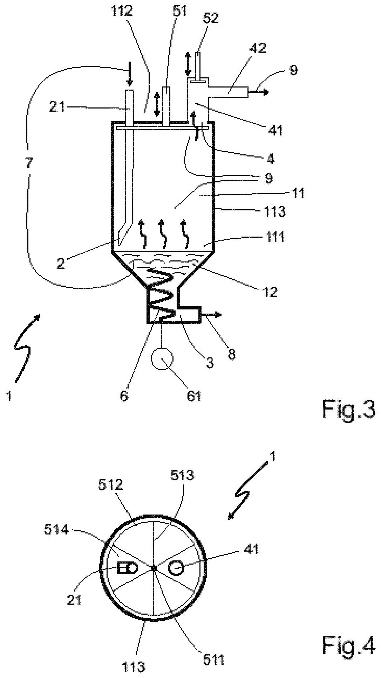

Eine andere Ausführungsform des erfindungsgemäßen Verfahrens ist in den Fig. 3 und 4 dargestellt. Die Unterteilung des Reaktionsraumes 1 in einen kreiszylinderförmigen oberen Abschnitt 11 mit zwei Kreisflächen 111, 112 und einer Mantelfläche 113 sowie einen unteren Abschnitt 12 entspricht jener der ersten Ausführungsform. Die Einlassöffnung 2 ist mittels einer Einlassleitung 21 mit der zweiten Kreisfläche 112 des oberen Abschnitts 11 verbunden und so angeordnet, dass sie einen tangentialen Eintrag einer Flüssigkeit durch die Einlassöffnung 2 entlang der Mantelfläche 113 in den oberen Abschnitt 11 ermöglicht. Im Gegensatz zu der ersten Ausführungsform ist die erste Auslassöffnung 3 nicht am Boden des unteren Abschnitts 12, sondern seitlich an diesem Boden angeordnet. Zum Transport einer Polymerschmelze durch die erste Auslassöffnung 3 ist eine in dem unteren Abschnitt 12 angeordnete Transportvorrichtung 6 in Form einer Transportschnecke vorgesehen, die mittels eines Motors 61 angetrieben wird. Die erste Abtrageeinrichtung 51 besteht aus einer Stange 511 und einem ringförmigen Messer 512, das über sechs Speichen 513 mit der Stange 511 verbunden ist. Zwischen den Speichen 513 befinden sich Öffnungen. Durch eine dieser Öffnungen 514 ist die Einlassleitung 21 geführt. Alle Öffnungen ermöglichen die Bewegung einer gasförmigen Substanz 9 durch die erste Abtrageeinrichtung 51 hindurch zu der zweiten Auslassöffnung 4. Die zweite Auslassöffnung 4 ist mit einer Auslassleitung 41 verbunden, die ihrerseits mit einem Auslassrohr 42 verbunden ist. Entlang der Längsachse der Auslassleitung 41 ist eine zweite Abtrageeinrichtung 52 verfahrbar angeordnet, um Ablagerungen von der Innenwand der Auslassleitung 41 entfernen zu können. Die zweite Abtrageeinrichtung 52 berührt die Innenwand der Auslassleitung 41.

In einer Ausführungsform des erfindungsgemäßen Verfahrens zur Synthese eines Polymers, das in der erfindungsgemäßen Vorrichtung gemäß den Fig. 3 und 4 durchgeführt wird, wird eine Präpolymerschmelze 7 durch die Einlassöffnung 2 tangential zur Mantelfläche 113 des ersten Abschnitts 11 in den Reaktionsraum 1 der Vorrichtung eingebracht. Diese sammelt sich im unteren Abschnitt 12 des Reaktionsraums. Es findet eine Polymerisation der Präpolymerschmelze 7 zu einer Polymerschmelze 8 statt, die mittels der Transportvorrichtung 6 aus der ersten Auslassöffnung 3 heraus transportiert wird. Wasserdampf wird als gasförmige Substanz aus dem Reaktionsraum 1 durch die zweite Auslassöffnung 4, die Auslassleitung 41 und das Auslassrohr 42 heraustransportiert. Ablagerungen an der Innenwand des ersten Abschnitts 11 oberhalb der Einlassöffnung 2 werden durch ein vertikales Verfahren der ersten Abtrageeinrichtung 51 im Reaktionsraum 11 entfernt. Ablagerungen in der Auslassleitung 41 werden durch ein Verfahren der zweiten Abtrageeinrichtung 52 entlang der gesamten Auslassleitung 41 entfernt. Das erfindungsgemäße Verfahren ermöglicht die Vermeidung der Bildung von Ablagerungen im Inneren des Reaktionsraums oder der Auslassleitung. Dadurch ist eine kontinuierliche Durchführung des erfindungsgemäßen Verfahrens über einen langen Zeitraum möglich, ohne es zur manuellen Reinigung der Vorrichtung von Ablagerungen unterbrechen zu müssen.

### Bezugszeichenliste

- 1: Reaktionsraum
- 2: Einlassöffnung
- 3: erste Auslassöffnung
- 4: zweite Auslassöffnung
- 6: Transportvorrichtung
- 7: Präpolymerschmelze
- 8: Polymerschmelze
- 9: gasförmige Substanz
- 11: oberer Abschnitt
- 12: unterer Abschnitt
- 21: Einlassleitung
- 41: Auslassleitung
- 42: Auslassrohr
- 51: Erste Abtrageeinrichtung
- 52: Zweite Abtrageeinrichtung
- 61: Motor
- 111: erste Kreisfläche
- 112: zweite Kreisfläche
- 113: Mantelfläche
- 511: Stange
- 512: Messer
- 513: Speiche(n)
- 514: Öffnung(en)

## Patentansprüche

1. Kontinuierliches Verfahren zur Synthese eines Polymers unter Abscheidung einer gasförmigen Substanz in einer Vorrichtung umfassend
- einen Reaktionsraum (1), der einen im Wesentlichen kreiszylinderförmigen oberen Abschnitt (11), der durch zwei Kreisflächen (111 112) und eine Mantelfläche (113) begrenzt wird und eine Zylinderlängsachse aufweist, sowie einen unteren Abschnitt (12) umfasst, wobei der obere Abschnitt (11) und der untere Abschnitt (12) über die erste Kreisfläche (111) miteinander verbunden sind,
- eine Einlassöffnung (2), die so in der Mantelfläche (113) angeordnet ist, dass ein tangentialer Eintrag einer Flüssigkeit durch die Einlassöffnung (2) entlang der Mantelfläche (113) in den oberen Abschnitt (11) ermöglicht wird,
- eine erste Auslassöffnung (3), die in einer Wand des unteren Abschnitts (12) angeordnet ist,
- eine zweite Auslassöffnung (4), die in der zweiten Kreisfläche (112) oder in der Mantelfläche (113) zwischen der Einlassöffnung (2) und der zweiten Kreisfläche (112) angeordnet ist, und
- wenigstens eine erste Abtrageeinrichtung (51), die mindestens zwischen der zweiten Kreisfläche (112) und der Einlassöffnung (2) entlang der Zylinderlängsachse verfahrbar angeordnet ist und die Mantelfläche (113) berührt,
mit den folgenden Verfahrensschritten:
a) Zuführen einer Präpolymerschmelze (7) in einen kreiszylinderförmigen ersten Abschnitt (11) eines Reaktionsraums (1) durch eine Einlassöffnung (2) tangential zu einer Mantelfläche (113) des ersten Abschnitts (11),
b) Polymerisation der Präpolymerschmelze (7) zu einer Polymerschmelze (8),
c) Entfernen der Polymerschmelze (8) aus dem Reaktionsraum (1) durch eine erste Auslassöffnung (3) des Reaktionsraums (1), und
d) Entfernen einer gasförmigen Substanz (9) aus dem Reaktionsraum (1) durch eine zweite Auslassöffnung (4) des Reaktionsraums (1) oberhalb der Einlassöffnung (2),
**dadurch gekennzeichnet, dass** Ablagerungen an mindestens einer Innenwand des oberen Abschnitts (11) des Reaktionsraums (1) oberhalb der Einlassöffnung (2) von wenigstens der ersten Abtrageeinrichtung (51) entfernt werden.

2. Verfahren nach Anspruch 1 **dadurch gekennzeichnet, dass** die erste Abtrageeinrichtung (51) um die Zylinderlängsachse des ersten Abschnitts (11) gedreht wird.

3. Verfahren nach Anspruch 1, **dadurch gekennzeichnet, dass** die Einlassöffnung (2) mittels einer Einlassleitung (21) mit der zweiten Kreisfläche (112) des oberen Abschnitts (11) verbunden ist, wobei die erste Abtrageeinrichtung (51) eine Öffnung aufweist, durch welche die Einlassleitung (21) geführt ist.

4. Verfahren nach einem der Ansprüche 1 bis 3, **dadurch gekennzeichnet, dass** die zweite Auslassöffnung (4) mit einer Auslassleitung (41) verbunden ist, in der eine zweite Abtrageeinrichtung (52) angeordnet ist, die entlang der Auslassleitung (41) verfahrbar angeordnet ist und die Innenfläche der Auslassleitung (41) berührt.

5. Verfahren nach einem der Ansprüche 1 bis 4, **dadurch gekennzeichnet, dass** ein Querschnitt des unteren Abschnitts (12) sich vom oberen Abschnitt (11) zu der ersten Auslassöffnung (3) hin verringert.

6. Verfahren nach Anspruch 1 oder 2, **dadurch gekennzeichnet, dass** die Geschwindigkeit mit der die Polymerschmelze (8) sich auf die erste Auslassöffnung (3) zubewegt mit sinkendem Abstand zu der ersten Auslassöffnung (3) steigt.

7. Verfahren nach Anspruch 6, **dadurch gekennzeichnet, dass** die Polymerschmelze (8) mittels einer Transportvorrichtung (6) zu der ersten Auslassöffnung (3) transportiert wird.

8. Verfahren nach einem der Ansprüche 1, 2, 6 oder 7, **dadurch gekennzeichnet, dass** das Polymer ausgewählt ist unter thermoplastischen Polymeren, bevorzugt Polyamiden, thermoplastischen Polyurethanen, Polyolefinen, vinylaromatischen Polymeren, Polyestern, Polyacetalen, Polycarbonaten, Polysulfonen, Polyethersulfonen und Mischungen davon.

9. Verfahren nach einem der Ansprüche 1, 2, 6, 7 oder 8, **dadurch gekennzeichnet, dass** das Polymer ein Polyamid ist und die gasförmige Substanz Wasserdampf ist.

10. Verfahren nach einem der Ansprüche 1, 2, 6, 7, 8 oder 9, **dadurch gekennzeichnet, dass** das Polymer ein teilaromatisches Polyamid ist, das wenigstens eine Wiederholungseinheit mit einer aromatischen Gruppe und wenigstens eine Wiederholungseinheit mit einer aliphatischen oder cycloaliphatischen Gruppe eingebaut enthält.

11. Verfahren nach einem der Ansprüche 8 bis 10, **dadurch gekennzeichnet, dass** das Polymer ein Polyamid ist, ausgewählt unter
PA 6.T, PA 9.T, PA8.T, PA 10.T, PA 12.T,
PA 6.I, PA 8.I, PA 9.I, PA 10.I, PA 12.I, PA 6.T/6, PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T,
PA 6.T/12.T/IPDA.T, PA 6.T/10.T/PACM.T, PA 6.T/12.T/PACM.T,
PA 10.T/IPDA.T, PA 12.T/IPDA.T und Copolymeren und Gemischen davon.

## Claims

1. A continuous process for synthesizing a polymer with separation of a gaseous substance in an apparatus comprising
- a reaction space (1) comprising an essentially circular cylindrical upper section (11) which is delimited by two circular faces (111, 112) and one shell face (113) and has a longitudinal cylinder axis, and a lower section (12), the upper section (11) and the lower section (12) being joined to one another via the first circular face (111),
- an inlet orifice (2) is disposed within the shell face (113) such that tangential introduction of a liquid through the inlet orifice (2) along the shell face (113) into the upper section (11) is enabled,
- a first outlet orifice (3) disposed in a wall of the lower section (12),
- a second outlet orifice (4) disposed in the second circular face (112) or in the shell face (113) between the inlet orifice (2) and the second circular face (112), and
- at least one first removal device (51) which is disposed so as to be movable along the longitudinal cylinder axis at least between the second circular face (112) and the inlet orifice (2) and is in contact with the shell face (113),
having the following process steps:
a) feeding a prepolymer melt (7) into a circular cylindrical first section (11) of a reaction space (1) through an inlet orifice (2) tangentially to a shell face (113) of the first section (11),
b) polymerizing the prepolymer melt (7) to give a polymer melt (8),
c) removing the polymer melt (8) from the reaction space (1) through a first outlet orifice (3) of the reaction space (1), and
d) removing a gaseous substance (9) from the reaction space (1) through a second outlet orifice (4) of the reaction space (1) above the inlet orifice (2),
wherein deposits on at least one inner wall of the upper section (11) of the reaction space (1) above the inlet orifice (2) are removed by at least the first removal device (51).

2. The process according to claim 1, wherein the first removal device (51) is rotated about the longitudinal cylinder axis of the first section (11).

3. The process according to claim 1, wherein the inlet orifice (2) is connected by means of an inlet line (21) to the second circular face (112) of the upper section (11), the first removal device (51) having an orifice through which the inlet line (21) is conducted.

4. The process according to any of claims 1 to 3, wherein the second outlet orifice (4) is connected to an outlet line (41) in which there is disposed a second removal device (52) which is disposed so as to be movable along the outlet line (41) and is in contact with the inner face of the outlet line (41).

5. The process according to any of claims 1 to 4, wherein a cross section of the lower section (12) decreases from the upper section (11) toward the first outlet orifice (3).

6. The process according to claim 1 or 2, wherein the speed with which the polymer melt (8) moves toward the first outlet orifice (3) rises with falling distance from the first outlet orifice (3).

7. The process according to claim 6, wherein the polymer melt (8) is transported by means of a transport apparatus (6) to the first outlet orifice (3).

8. The process according to any of claims 1, 2, 6 and 7, wherein the polymer is selected from thermoplastic polymers, preferably polyamides, thermoplastic polyurethanes, polyolefins, vinylaromatic polymers, polyesters, polyacetals, polycarbonates, polysulfones, polyether sulfones and mixtures thereof.

9. The process according to any of claims 1, 2, 6, 7 and 8, wherein the polymer is a polyamide and the gaseous substance is steam.

10. The process according to any of claims 1, 2, 6, 7, 8 and 9, wherein the polymer is a semiaromatic polyamide comprising at least one repeat unit having an aromatic group and at least one repeat unit having an aliphatic or cycloaliphatic group in incorporated form.

11. The process according to any of claims 8 to 10, wherein the polymer is a polyamide selected from
PA 6.T, PA 9.T, PA8.T, PA 10.T, PA 12.T,
PA 6.1, PA 8.1, PA 9.1, PA 10.1, PA 12.1, PA 6.T/6,
PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA
PACM.I, PA PACM.T, PA MXDA.I, PA MXDA.T, PA 6.T/IPDA.T, PA 6.T/MACM.T, PA 6.T/PACM.T,
PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I,
PA 6.T/10.T/IPDA.T, PA 6.T/12.T/IPDA.T, PA 6.T/10.T/PACM.T, PA 6.T/12.T/PACM.T,
PA 10.T/IPDA.T, PA 12.T/IPDA.T and copolymers and mixtures thereof.

## Revendications

1. Procédé continu de synthèse d'un polymère avec séparation d'une substance gazeuse dans un dispositif comprenant :
- une chambre de réaction (1), qui comprend une section supérieure essentiellement cylindrique circulaire (11), qui est délimitée par deux surfaces circulaires (111, 112) et une surface d'enveloppe (113) et présente un axe longitudinal de cylindre, et une section inférieure (12), la section supérieure (11) et la section inférieure (12) étant reliées l'une avec l'autre par la première surface circulaire (111),
- une ouverture d'entrée (2), qui est agencée dans la surface d'enveloppe (113) de manière à permettre une entrée tangentielle d'un liquide par l'ouverture d'entrée (2) le long de la surface d'enveloppe (113) dans la section supérieure (11),
- une première ouverture de sortie (3), qui est agencée dans une paroi de la section inférieure (12),
- une deuxième ouverture de sortie (4), qui est agencée dans la deuxième surface circulaire (112) ou dans la surface d'enveloppe (113) entre l'ouverture d'entrée (2) et la deuxième surface circulaire (112), et
- au moins un premier dispositif d'ablation (51), qui est agencé de manière mobile le long de l'axe longitudinal de cylindre au moins entre la deuxième surface circulaire (112) et l'ouverture d'entrée (2),
et est en contact avec la surface d'enveloppe (113), comprenant les étapes de procédé suivantes :
a) l'introduction d'une masse fondue de prépolymère (7) dans une première section cylindrique circulaire (11) d'une chambre de réaction (1) par une ouverture d'entrée (2) tangentiellement à une surface d'enveloppe (113) de la première section (11),
b) la polymérisation de la masse fondue de prépolymère (7) en une masse fondue de polymère (8),
c) le déchargement de la masse fondue de polymère (8) de la chambre de réaction (1) par une première ouverture de sortie (3) de la chambre de réaction (1), et
d) le déchargement d'une substance gazeuse (9) de la chambre de réaction (1) par une deuxième ouverture de sortie (4) de la chambre de réaction (1) au-dessus de l'ouverture d'entrée (2),
**caractérisé en ce que** des dépôts sur au moins une paroi intérieure de la section supérieure (11) de la chambre de réaction (1) au-dessus de l'ouverture d'entrée (2) sont éliminés par au moins le premier dispositif d'ablation (51).

2. Procédé selon la revendication 1, **caractérisé en ce que** le premier dispositif d'ablation (51) est mis en rotation autour de l'axe longitudinal de cylindre de la première section (11).

3. Procédé selon la revendication 1, **caractérisé en ce que** l'ouverture d'entrée (2) est reliée au moyen d'une conduite d'entrée (21) avec la deuxième surface circulaire (112) de la section supérieure (11), le premier dispositif d'ablation (51) comprenant une ouverture au travers de laquelle la conduite d'entrée (21) est guidée.

4. Procédé selon l'une quelconque des revendications 1 à 3, **caractérisé en ce que** la deuxième ouverture de sortie (4) est reliée avec une conduite de sortie (41), dans laquelle un deuxième dispositif d'ablation (52) est agencé, qui est agencé de manière mobile le long de la conduite de sortie (41) et est en contact avec la surface intérieure de la conduite de sortie (41).

5. Procédé selon l'une quelconque des revendications 1 à 4, **caractérisé en ce qu'**une section transversale de la section inférieure (12) rétrécit depuis la section supérieure (11) vers la première ouverture de sortie (3).

6. Procédé selon la revendication 1 ou 2, **caractérisé en ce que** la vitesse à laquelle la masse fondue de polymère (8) se déplace vers la première ouverture de sortie (3) augmente lorsque l'écart avec la première ouverture de sortie (3) diminue.

7. Procédé selon la revendication 6, **caractérisé en ce que** la masse fondue de polymère (8) est transportée au moyen d'un dispositif de transport (6) vers la première ouverture de sortie (3).

8. Procédé selon l'une quelconque des revendications 1, 2, 6 ou 7, **caractérisé en ce que** le polymère est choisi parmi les polymères thermoplastiques, de préférence les polyamides, les polyuréthanes thermoplastiques, les polyoléfines, les polymères aromatiques de vinyle, les polyesters, les polyacétals, les polycarbonates, les polysulfones, les polyéthersulfones et leurs mélanges.

9. Procédé selon l'une quelconque des revendications 1, 2, 6, 7 ou 8, **caractérisé en ce que** le polymère est un polyamide et la substance gazeuse est la vapeur d'eau.

10. Procédé selon l'une quelconque des revendications 1, 2, 6, 7, 8 ou 9, **caractérisé en ce que** le polymère est un polyamide partiellement aromatique, qui contient sous forme incorporée au moins une unité de répétition contenant un groupe aromatique et au moins une unité de répétition contenant un groupe aliphatique ou cycloaliphatique.

11. Procédé selon l'une quelconque des revendications 8 à 10, **caractérisé en ce que** le polymère est un polyamide, qui est choisi parmi :
PA 6.T, PA 9.T, PA 8.T, PA 10.T, PA 12.T,
PA 6.I, PA 8.I, PA 9.I, PA 10.I, PA 12.I, PA 6.T/6, PA 6.T/10, PA 6.T/12, PA 6.T/6.I, PA 6.T/8.T, PA 6.T/9.T,
PA 6.T/10T, PA 6.T/12.T, PA 12.T/6.T, PA 6.T/6.I/6, PA 6.T/6.I/12, PA 6.T/6.1/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I,
PA 8.T/8.6, PA 8.T/6.I, PA 10.T/6.T, PA 10.T/6.6, PA 10.T/10.1, PA 10T/10.I/6.T, PA 10.T/6.I, PA 4.T/4.I/46,
PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T et leurs copolymères et leurs mélanges.
